# EUROPEAN PATENT APPLICATION

(11) **EP 3 113 020 A1**
(43) Date of publication of application: **04.01.2017**
(21) Application number: 14883718.0
(22) Date of filing: 05.11.2014
(51) Int. Cl.: G06F 9/46

(54) **DATA PROCESSING DEVICE AND METHOD FOR PROCESSING SERIAL TASKS**

(30) Priority: 27.02.2014 CN 201410069692
(71) Applicant: Huawei Technologies Co., Ltd., Longgang District Shenzhen, Guangdong 518129 (CN)
(72) Inventor: LIU, Yanchu, Shenzhen Guangdong 518129 (CN); LIU, Chao, Shenzhen Guangdong 518129 (CN)
(74) Representative: Isarpatent
(86) International application number: PCT/CN2014/090300
(87) International publication number: WO 2015/127796

(57) **Abstract**

Embodiments of the present invention disclose a data processing apparatus and method for processing serial tasks, which can reduce, in a data processing process, a quantity of times of reading an output result from disks of node devices in a distributed system, thereby reducing time required and network resources occupied for processing a large amount of data. The method in the present invention includes: acquiring at least two MapReduce tasks, where the at least two MapReduce tasks are serially arranged according to an execution sequence, and when two MapReduce tasks are serially arranged, an output value obtained after the former MapReduce task is executed is an input value of the latter MapReduce task; combining the at least two MapReduce tasks to obtain a target MapReduce task; and executing the target MapReduce task, and obtaining an output result of the target MapReduce task.

## Description

### TECHNICAL FIELD

The present invention relates to the field of electronic information technologies, and in particular, to a data processing apparatus and method for processing serial tasks.

### BACKGROUND

As a data scale grows larger currently, many technologies applicable to big data processing have been developed, so as to effectively process large-scale data. MapReduce is a technology commonly used to process large-scale data. A Map (Map) function and a Reduce (Reduce) function need to be used in a programming model to which the MapReduce is applied. The Map function takes a key-value pair (key-value pair), and generates a group of intermediate key-value pairs, and values with a same key in the intermediate key-value pairs generated in the Map function are transferred to the reduce function. The reduce function takes a key and a group of related values, and combines this group of values to generate a group of values of a smaller scale (generally only one value or zero values).

In practical application, one MapReduce task may include one Map (Map) function-based Map task and one Reduce (Reduce) function-based Reduce task. For example, in an HDFS (Hadoop Distributed File System, Hadoop distributed file system) technology, it is generally required to execute multiple serial MapReduce tasks. For each MapReduce task, a Map task needs to be executed first, and an output result is stored on a disk of each node device in a distributed system; and then, an output result obtained after completion of each Map task is remotely copied from each node device in the distributed system by using the HTTP protocol, and a Reduce task is performed on the output result. This process is repeated until execution of all MapReduce procedures is sequentially completed.

It may be learned that, an output result needs to be read at least once from a disk of a node device in a distributed system to execute one MapReduce task. If multiple serial MapReduce tasks are executed, much time and network bandwidth need to be occupied to read an output result from a disk of each node device in the distributed system multiple times, thereby increasing time and network resources required for processing a large amount of data.

### SUMMARY

Embodiments of the present invention provide a data processing apparatus and method for processing serial tasks, which can reduce, in a data processing process, a quantity of times of reading an output result from disks of node devices in a distributed system, thereby reducing time required and network resources occupied for processing a large amount of data.

To achieve the foregoing objective, the following technical solutions are used in the embodiments of the present invention:

According to a first aspect, an embodiment of the present invention provides a data processing apparatus for processing serial tasks, including:
a task extraction module, configured to acquire at least two MapReduce tasks, where the at least two MapReduce tasks are serially arranged according to an execution sequence, the at least two MapReduce tasks are serially arranged according to an execution sequence, and when two MapReduce tasks are serially arranged, an output value obtained after the former MapReduce task is executed is an input value of the latter MapReduce task;
a combination module, configured to combine the at least two MapReduce tasks to obtain a target MapReduce task; and
an execution module, configured to execute the target MapReduce task, and obtain an output result of the target MapReduce task.

With reference to the first aspect, in a first possible implementation manner of the first aspect, the combination module includes:
an analysis unit, configured to extract, from the at least two MapReduce tasks, a Map task corresponding to each MapReduce task;
a combination unit, configured to combine code of the Map task corresponding to each MapReduce task of the at least two MapReduce tasks, and obtain code of a combined Map task, where when an information dependency exists between the at least two MapReduce tasks, the at least two MapReduce tasks are sequentially arranged according to the execution sequence, and an output value of code of a Map task corresponding to a former MapReduce task is used as an input value of code of a Map task corresponding to a latter MapReduce task adjacent to the former MapReduce task; and
a target task generation unit, configured to obtain the target MapReduce task by using the code of the combined Map task.

With reference to the first possible implementation manner of the first aspect, in a second possible implementation manner, the execution module includes:
an execution unit, configured to execute the combined Map task;
a sending unit, configured to send an execution result of the combined Map task to a device used to execute a Reduce task; and
a receiving unit, configured to receive an output result sent by the device used to execute a Reduce task, where the output result is obtained, according to the execution result of the combined Map task, by the device used to execute a Reduce task.

With reference to the first or the second possible implementation manner of the first aspect, in a third possible implementation manner, the combination unit is specifically configured to:
acquire environment setup operation code, logical operation code, and environment cleanup operation code that are of the Map task corresponding to each MapReduce task; and
first compile the acquired environment setup operation code of the Map task corresponding to each MapReduce task, then compile the acquired logical operation code of the Map task corresponding to each MapReduce task, then compile the acquired environment cleanup operation code of the Map task corresponding to each MapReduce task, and finally, obtain the code of the combined Map task.

According to a second aspect, an embodiment of the present invention provides a data processing method for processing serial tasks, including:
acquiring at least two MapReduce tasks, where the at least two MapReduce tasks are serially arranged according to an execution sequence, and when two MapReduce tasks are serially arranged, an output value obtained after the former MapReduce task is executed is an input value of the latter MapReduce task;
combining the at least two MapReduce tasks to obtain a target MapReduce task; and
executing the target MapReduce task, and obtaining an output result of the target MapReduce task.

With reference to the second aspect, in a first possible implementation manner of the second aspect, the combining the at least two MapReduce tasks to obtain a target MapReduce task specifically includes:
extracting, from the at least two MapReduce tasks, a Map task corresponding to each MapReduce task;
combining code of the Map task corresponding to each MapReduce task of the at least two MapReduce tasks, and obtaining code of a combined Map task, where when an information dependency exists between the at least two MapReduce tasks, the at least two MapReduce tasks are sequentially arranged according to the execution sequence, and an output value of code of a Map task corresponding to a former MapReduce task is used as an input value of code of a Map task corresponding to a latter MapReduce task adjacent to the former MapReduce task; and
obtaining the target MapReduce task by using the code of the combined Map task.

With reference to the first possible implementation manner of the second aspect, in a second possible implementation manner, the executing the target MapReduce task, and obtaining an output result of the target MapReduce task includes:
executing the combined Map task, and sending an execution result of the combined Map task to a device used to execute a Reduce task; and
receiving an output result sent by the device used to execute a Reduce task, where the output result is obtained, according to the execution result of the combined Map task, by the device used to execute a Reduce task.

With reference to the first or the second possible implementation manner of the second aspect, in a third possible implementation manner, the combining code of the Map task corresponding to each MapReduce task of the at least two MapReduce tasks, and obtaining code of a combined Map task specifically includes:
acquiring environment setup operation code, logical operation code, and environment cleanup operation code that are of the Map task corresponding to each MapReduce task; and
first compiling the acquired environment setup operation code of the Map task corresponding to each MapReduce task, then compiling the acquired logical operation code of the Map task corresponding to each MapReduce task, then compiling the acquired environment cleanup operation code of the Map task corresponding to each MapReduce task, and finally, obtaining the code of the combined Map task.

According to a third aspect, an embodiment of the present invention provides a computing device for processing serial tasks, where the computing device includes at least a processor and a communications interface, the processor and the communications interface are connected by using a bus of the computing device, and the communications interface is configured to perform data transmission between the computing device and an external storage device;
the processor is configured to acquire at least two MapReduce tasks, and combine the at least two MapReduce tasks to obtain a target MapReduce task, where the at least two MapReduce tasks are serially arranged according to an execution sequence, and when two MapReduce tasks are serially arranged, an output value obtained after the former MapReduce task is executed is an input value of the latter MapReduce task;
the processor is further configured to execute the target MapReduce task, obtain an output result of the target MapReduce task, and send an output result to the communications interface; and
the communications interface is configured to send the output result to the external storage device.

With reference to the third aspect, in a first possible implementation manner of the third aspect, the processor is specifically configured to: extract, from the at least two MapReduce tasks, a Map task corresponding to each MapReduce task; combine, according to an information dependency between the at least two MapReduce tasks, code of the Map task corresponding to each MapReduce task of the at least two MapReduce tasks, and obtain code of a combined Map task, where when the information dependency exists between the at least two MapReduce tasks, the at least two MapReduce tasks are sequentially arranged according to the execution sequence, and an output value of code of a Map task corresponding to a former MapReduce task is used as an input value of code of a Map task corresponding to a latter MapReduce task adjacent to the former MapReduce task; and obtain the target MapReduce task by using the code of the combined Map task.

With reference to the first possible implementation manner of the third aspect, in a second possible implementation manner, the processor is specifically configured to: execute the combined Map task, and send an execution result of the combined Map task to a device used to execute a Reduce task; and
receive an output result sent by the device used to execute a Reduce task, where the output result is obtained, according to the execution result of the combined Map task, by the device used to execute a Reduce task.

With reference to the first or the second possible implementation manner of the third aspect, in a third possible implementation manner, the processor is specifically configured to: acquire environment setup operation code, logical operation code, and environment cleanup operation code that are of the Map task corresponding to each MapReduce task; and first compile the acquired environment setup operation code of the Map task corresponding to each MapReduce task, then compile the acquired logical operation code of the Map task corresponding to each MapReduce task, then compile the acquired environment cleanup operation code of the Map task corresponding to each MapReduce task, and finally, obtain the code of the combined Map task.

According to the computing device, and the data processing apparatus and method for processing serial tasks provided in embodiments of the present invention, multiple serial MapReduce tasks can be combined, and a MapReduce task obtained by means of combination is executed. In the MapReduce task obtained by means of combination, a Reduce task needs to be executed only once. Therefore, in the present invention, by means of combination of MapReduce tasks for execution, a quantity of times required for executing a Reduce task during execution of serial MapReduce tasks is reduced, and time and network bandwidth that need to be occupied when an output result is read from disks of node devices in a distributed system in a process of executing the Reduce task are reduced, thereby reducing time and network resources required for processing a large amount of data.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a flowchart of a data processing method for processing serial tasks according to an embodiment of the present invention;
FIG. 1a and FIG. 1b are schematic logical diagrams of specific instances according to an embodiment of the present invention;
FIG. 2 is a flowchart of another data processing method for processing serial tasks according to an embodiment of the present invention;
FIG. 3 is a flowchart of still another data processing method for processing serial tasks according to an embodiment of the present invention;
FIG. 4 is a schematic diagram of a specific instance according to an embodiment of the present invention;
FIG. 5 is a schematic structural diagram of a computing device for processing serial tasks according to an embodiment of the present invention;
FIG. 6 is a schematic structural diagram of a data processing apparatus for processing serial tasks according to an embodiment of the present invention; and
FIG. 7 is a schematic structural diagram of another data processing apparatus for processing serial tasks according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

The terms used in the embodiments of the present invention are merely for the purpose of illustrating specific embodiments, and are not intended to limit the present invention. The terms "a" and "the" of singular forms used in the embodiments and the appended claims of the present invention are also intended to include plural forms, unless otherwise specified in the context clearly. It should also be understood that, the term "and/or" used herein indicates and includes any or all possible combinations of one or more associated listed items. Depending on the context, as used herein, the word "if' may be construed as "at the time of ..." or "when ..." or "in response to determining" or "in response to detecting". Similarly, depending on the context, the phrase "if it is determined" or "if detecting (the described condition or event)" may be construed as "when determining", "in response to determining", "when detecting (the described condition or event)", or "in response to detecting (the described condition or event)".

It should be noted that, embodiments provided by the embodiments of the present invention may be executed by any type of computing device with a data processing and transmission function, for example, a server, a computer, or a terminal device.

Specifically, an implementation process of the embodiments may use an existing hardware environment that implements a MapReduce technology, and may store, in a distributed system, data processed by using the method in the embodiments.

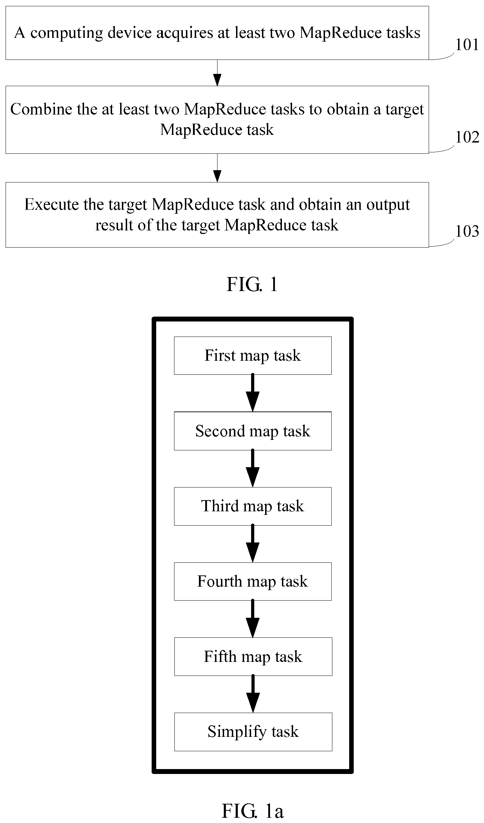

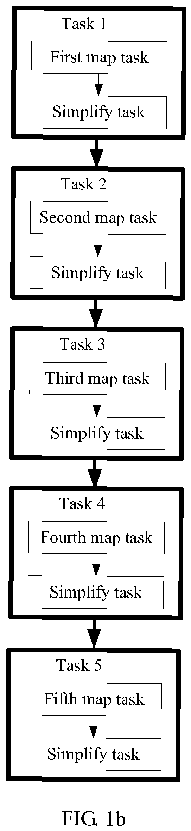

An embodiment of the present invention provides a data processing method for processing serial tasks. As shown in FIG. 1, the method includes the following steps:
101. A computing device acquires at least two MapReduce tasks.

The at least two MapReduce tasks are serially arranged according to an execution sequence. When two MapReduce tasks are serially arranged, an output value obtained after the former MapReduce task is executed is an input value of the latter MapReduce task. When starting to run M/R (a MapReduce framework) and starting to process a MapReduce task, the computing device acquires the at least two MapReduce tasks that are serially arranged according to the execution sequence. For example, the computing device acquires a series of MapReduce tasks used to implement a computing process, where a processing result of a former MapReduce task may be an input value of a latter MapReduce task or input values of multiple latter MapReduce tasks.

102. Combine the at least two MapReduce tasks to obtain a target MapReduce task. In this embodiment, a process of combining the at least two MapReduce tasks may be construed as combining respective Map tasks of the at least two MapReduce tasks.

For example, as shown in FIG. 1a, "first Map task" represents a Map task 1, "second Map task" represents a Map task 2, ..., and "fifth Map task" represents a Map task 5; "simplify task" represents a Reduce task; MapReduce 1 - MapReduce 2 - ... - MapReduce N are serial tasks, where N is an integer greater than or equal to 3. The MapReduce task 1 includes outputting a result Output 1 after executing the Map task 1. The MapReduce task 2 includes outputting a result Output 2 after executing the Map task 2, and using the Output 1 as an input parameter for a process of executing the Map 2.... The Map Reduce task N includes outputting a result Output N after executing a Map task N, and using an Output N-1 as an input parameter for a process of executing the Map N. The computing device combines the Map task 1, the Map task 2, ..., and the Map task N, and generates a new Map task that is referred to as a target Map task. An output result obtained after executing the target Map task is the Output N. After the target Map task is executed and the Output N is output, the Output N is sent to a device used to execute a Reduce task. In this way, it is implemented that the computing device combines the MapReduce 1, the MapReduce 2, ..., and the MapReduce N to obtain the target MapReduce task, where the target MapReduce task is a combination of the target Map task and the Reduce task.

For example, MapReduce 1 - MapReduce 2 - MapReduce 3 - MapReduce 4 - MapReduce 5 are serial tasks used to implement accumulative computation. A initial value is 10. The MapReduce task 1 is a task used to add 1 to the raw value, where a Map task 1 of the MapReduce task 1 is used to implement "+1". The MapReduce task 2 is a task used to add 2 to the raw value, where a Map task 2 of the MapReduce task 2 is used to implement "+2". The MapReduce task 3 is a task used to add -1 to the raw value, where a Map task 3 of the MapReduce task 3 is used to implement "-1".

The MapReduce task 4 is a task used to add 0 to the raw value, where a Map task 4 of the MapReduce task 4 is used to implement "+0". The MapReduce task 5 is a task used to add 1 to the raw value, where a Map task 5 of the MapReduce task 5 is used to implement "+1".

If the solution in the prior art is used, an execution process of the serial tasks of MapReduce 1 - MapReduce 2 - MapReduce 3 - MapReduce 4 - MapReduce 5 is shown in FIG. 1b, where "task 1" represents the MapReduce 1, "task 2" represents the MapReduce 2, ..., and "task 5" represents the MapReduce 5; "first Map task" represents a Map task 1, "second Map task" represents a Map task 2, ..., and "fifth Map task" represents a Map task 5; "simplify task" represents a Reduce task.

The execution process in the prior art includes:
executing the MapReduce 1, reading the raw value to obtain an input value 10, executing the Map task 1 to obtain an output result 11, and sending the output result 11 to a device used to execute a Reduce task, so as to perform a Reduce task on the output result 11;
executing the MapReduce 2, reading the output result 11 of S1 from a distributed system and using the output result 11 as an input value, executing the Map task 2 to obtain an output result 13, and sending the output result 13 to the device used to execute a Reduce task, so as to perform a Reduce task on the output result 11;
executing the MapReduce 3, reading the output result 13 of S2 from the distributed system, executing the Map task 3 to obtain an output result 12, and sending the output result 12 to the device used to execute a Reduce task, so as to perform a Reduce task on the output result 11;
executing the MapReduce 4, reading the output result 12 of S3 from the distributed system, executing the Map task 4 to obtain an output result 12, and sending the output result 12 to the device used to execute a Reduce task, so as to perform a Reduce task on the output result 11; and
executing the MapReduce 5, reading the output result 12 of S4 from the distributed system, executing the Map task 5 to obtain an output result 13, and sending the output result 15 to the device used to execute a Reduce task, so as to perform a Reduce task on the output result 11.

However, in this embodiment, after determining the MapReduce tasks that are serially arranged and need to be combined, the computing device may combine all the MapReduce tasks into one MapReduce task. For example, after the MapReduce task 1, the MapReduce task 2, the MapReduce task 3, the MapReduce task 4, and the MapReduce task 5 are combined, a first target MapReduce task is obtained. A Map task of the first target MapReduce task is a Map M, where the Map 1 to the Map 5 are sequentially executed directly in a memory of the computing device, namely, "+1+2-1+0+1", to obtain that the Map task M is "+3". Then, an output result of executing the first target MapReduce task is Output M=10+3=13.

Alternatively, after determining the MapReduce tasks that are serially arranged and need to be combined, the computing device may combine some of all the MapReduce tasks into one MapReduce task. For example, the MapReduce task 1, the MapReduce task 2, the MapReduce task 3, and the MapReduce task 4 are combined to obtain a second target MapReduce task. A Map task of the second target MapReduce task is a Map M', the Map 1 to the Map 4 are sequentially executed directly in a memory of the computing device, namely, "+1+2-1+0", to obtain that the Map task M is "+2".

103. Execute the target MapReduce task, and obtain an output result of the target MapReduce task.

According to the data processing method for processing serial tasks provided in this embodiment of the present invention, multiple serial MapReduce tasks can be combined, and a MapReduce task obtained by means of combination is executed. In the MapReduce task obtained by means of combination, a Reduce task needs to be executed only once. Therefore, in the present invention, by means of combination of MapReduce tasks for execution, a quantity of times required for executing a Reduce task during execution of serial MapReduce tasks is reduced, and time and network bandwidth that need to be occupied when an output result is read from disks of node devices in a distributed system in a process of executing the Reduce task are reduced, thereby reducing time and network resources required for processing a large amount of data.

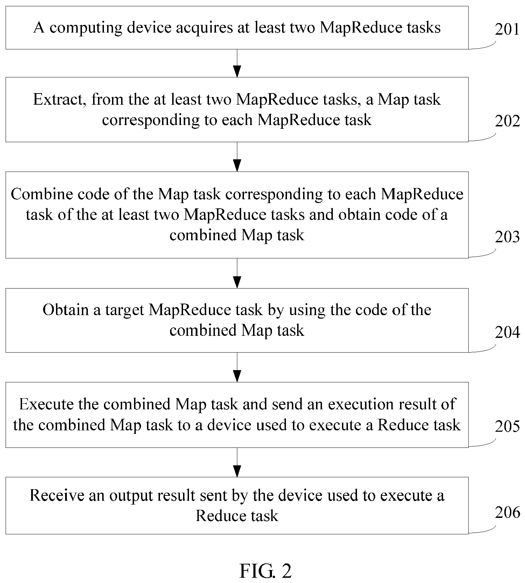

Specifically, an embodiment of the present invention may include a method shown in FIG. 2.

201. A computing device acquires at least two MapReduce tasks.

The at least two MapReduce tasks are serially arranged according to an execution sequence. When two MapReduce tasks are serially arranged, an output value obtained after the former MapReduce task is executed is an input value of the latter MapReduce task. When starting to run M/R (a MapReduce framework) and starting to process MapReduce tasks, the computing device acquires, from the to-be-processed MapReduce tasks, the at least two MapReduce tasks that are serially arranged according to the execution sequence. For example, the computing device acquires a series of MapReduce tasks used to implement a computing process, where a processing result of a former MapReduce task may be an input value of a latter MapReduce task or input values of multiple latter MapReduce tasks.

202. Extract, from the at least two MapReduce tasks, a Map task corresponding to each MapReduce task.

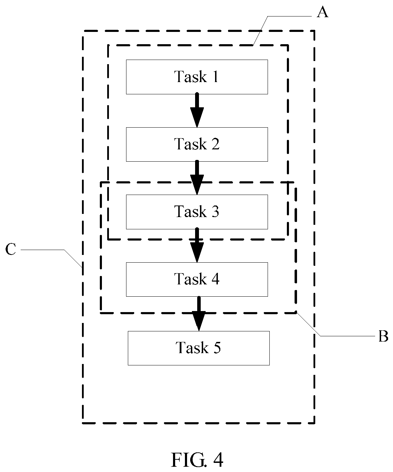

In this embodiment, some of the MapReduce tasks may be selected for combination from a series of MapReduce tasks in a serial relationship. For example, as shown in FIG. 4, "task 1" represents a MapReduce task 1, "task 2" represents a MapReduce task 2, ..., and "task 5" represents a MapReduce task 5. Only three (part A) or two (part B) of the shown MapReduce tasks may be selected from the five MapReduce tasks, or all of the five MapReduce tasks (part C) may be selected, that is, all of the MapReduce tasks are combined.

203. Combine code of the Map task corresponding to each MapReduce task of the at least two MapReduce tasks, and obtain code of a combined Map task.

When an information dependency exists between the at least two MapReduce tasks, the at least two MapReduce tasks are sequentially arranged according to the execution sequence, and an output value of code of a Map task corresponding to a former MapReduce task is used as an input value of code of a Map task corresponding to a latter MapReduce task adjacent to the former MapReduce task.

204. Obtain a target MapReduce task by using the code of the combined Map task. For example, (1) code information of a single Map task is:

```
           Map task 1
           {
           setup(); //Environment setup operation code
           map1(); //Logical operation code
           cleanup(); //Environment cleanup operation code
           }
           Map task 2
           {
           setup();
           map2();
           cleanup();
           }
           ...
           (2) the foregoing code may be combined to obtain the code of the
           combined Map task, which is:
           Map
           {
           setup() //Environment setup operation code
           {
           map 1.setup(context);
           map2. setup(context);
           ...
           }
           map() //Logical operation code
           {
           map1.map(context);
           map2.map (context);
           ...
           }
           cleanup() //Environment cleanup operation code
           {
           map2. cleanup(context);
           map1.cleanup(context);
           }
           }
```

After acquiring code information of the combined Map task, the computing device may generate the target MapReduce task by using the code information of the combined Map task. In the target MapReduce task, code information of a Map task is the code information of the combined Map task.

205. Execute the combined Map task, and send an execution result of the combined Map task to a device used to execute a Reduce task.

206. Receive an output result sent by the device used to execute a Reduce task.

The output result is obtained, according to the execution result of the combined Map task, by the device used to execute a Reduce task.

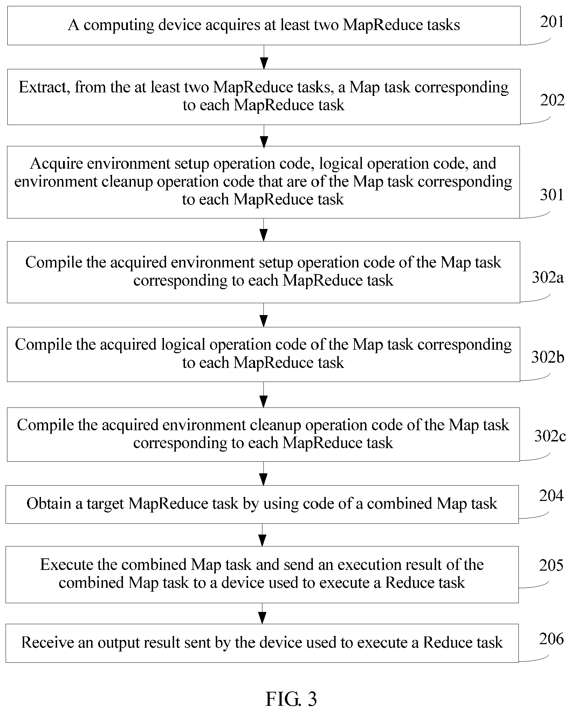

In this embodiment, as shown in FIG. 3, a specific implementation manner of step 203 may be implemented as the following steps:
301. Acquire environment setup operation code, logical operation code, and environment cleanup operation code that are of a Map task corresponding to each MapReduce task.

For example, (1) enumerated in the foregoing embodiment is code information of a Map task in a MapReduce task, where setup() is environment setup operation code, map1() is logical operation code, and cleanup() is environment cleanup operation code.

The computing device may sequentially execute 302a, 302b, and 302c, thereby completing compilation of the environment setup operation code, the logical operation code, and the environment cleanup operation code that are of each Map task.

302a. Compile the acquired environment setup operation code of the Map task corresponding to each MapReduce task.

302b. Compile the acquired logical operation code of the Map task corresponding to each MapReduce task.

302c. Compile the acquired environment cleanup operation code of the Map task corresponding to each MapReduce task.

According to the compiled environment setup operation code, logical operation code, and environment cleanup operation code of each of the acquired the Map tasks, the acquired Map tasks are combined to obtain one Map task, and the Map task obtained by means of combination is used as the combined Map task.

The computing device compiles the environment setup operation code, the logical operation code, and the environment cleanup operation code that are prepared for combination and that are in the Map tasks of the MapReduce tasks, and combines the environment setup operation code, logical operation code, and environment cleanup operation code that are obtained by means of compilation and that are of the Map tasks of the MapReduce tasks, to obtain code of a combined Map task that is shown in the following:

```
setup() //Environment setup operation code
           {
           map 1.setup(context);
           map2. setup(context);
           ...
           }
           map() //Logical operation code
           {
           map1.map(context);
           map2.map(context);
           ...
           }
           cleanup() //Environment cleanup operation code
           {
           map2.cleanup(context);
           map1.cleanup(context);
           }
```

Therefore, combination of multiple Map tasks is implemented, and the combined Map task is obtained. Then, a Reduce task is set to correspond to the combined Map task, thereby obtaining the target MapReduce task.

This embodiment of the present invention provides a specific implementation manner of combining multiple serial MapReduce tasks. By means of combination of Map tasks of MapReduce tasks, it is implemented that a MapReduce task is obtained by means of combination. During execution of the MapReduce task obtained by means of combination, after execution of a combined Map task is completed, it only requires to be corresponding to a Reduce task of the combined Map task, thereby reducing a quantity of times of executing a Reduce task. Therefore, in the present invention, by means of combination of MapReduce tasks for execution, a quantity of times required for executing a Reduce task during execution of serial MapReduce tasks is reduced, and time and network bandwidth that need to be occupied when an output result is read from disks of node devices in a distributed system in a process of executing the Reduce task are reduced, thereby reducing time and network resources required for processing a large amount of data.

In practical application, there is a serial sequence of MapReduce tasks of a relatively large total quantity. For example, in 100 MapReduce tasks in a serial relationship, for the 2^{nd} to the 10^{th} MapReduce tasks and the 20^{th} to the 25^{th} MapReduce tasks, a computing process is relatively complex, and an amount of data that needs to be read or written is extremely large. However, for other MapReduce tasks, a computing process is extremely simple, and occupied computing resources and an amount of data that needs to be read or written are extremely small. Then, a computing device may combine the 2^{nd} to the 10^{th} MapReduce tasks and combine the 20^{th} to the 25^{th} MapReduce tasks. Therefore, the original 100 MapReduce tasks in a serial relationship are reduced to 87 MapReduce tasks, and two of the 87 MapReduce tasks are MapReduce tasks obtained by means of combination. In this way, reading or writing of a large amount of data from a distributed system may be reduced, and time required for combining MapReduce tasks by the computing device is shortened at the same time because a quantity of MapReduce tasks that need to be combined is reduced, so that processing efficiency of the serial sequence of the MapReduce tasks of a relatively large total quantity may also be improved.

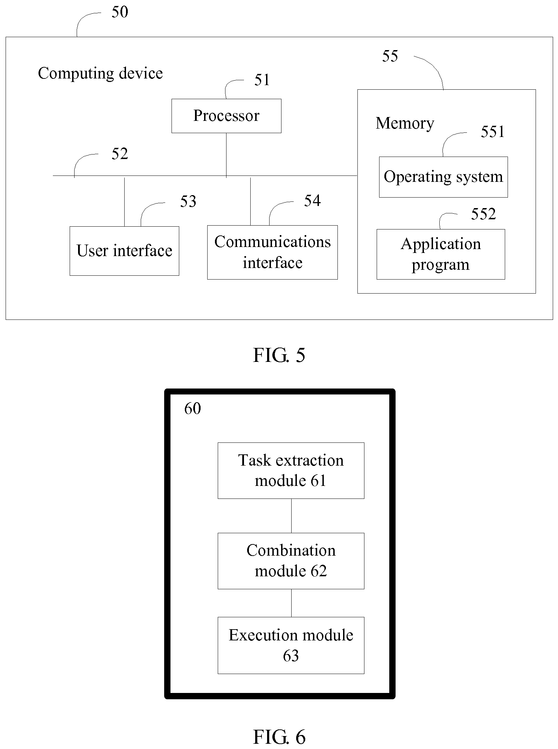

An embodiment of the present invention further provides a computing device 50 for processing serial tasks. As shown in FIG. 5, the computing device 50 may include: at least one processor 51, such as a CPU, and at least one communications interface 54.

Optionally, the computing device 50 may further include another user interface 53 and a memory 55. A bus 52 is used to implement connection and communication between these components. Optionally, the user interface 53 may include a display, a keyboard, or a click device (such as a mouse, a trackball (trackball), a touchpad, or a touch display screen). The communications interface 54 may be a type of network interface that can be used for data transmission between the computing device 50 and a distributed storage system. The memory 55 may include a high-speed RAM memory on the computing device 50, and may further include a non-volatile memory (non-volatile memory), for example, at least one magnetic disk memory. The memory 55 may optionally include at least one storage apparatus far from the foregoing processor 51.

In some implementation manners, the memory 55 stores the following elements and executable modules or data structures or subsets thereof, or extended sets thereof:
an operating system 551, including various system programs and used to implement various basic services and process hardware-based tasks; and
an application program 552, including various application programs and used to implement various application services. The application program 552 includes but is not limited to: a task extraction module 61, a combination module 62, an execution module 63, an analysis unit 621, a combination unit 622, a target task generation unit 623, an execution unit 631, a sending unit 632, and a receiving unit 633.

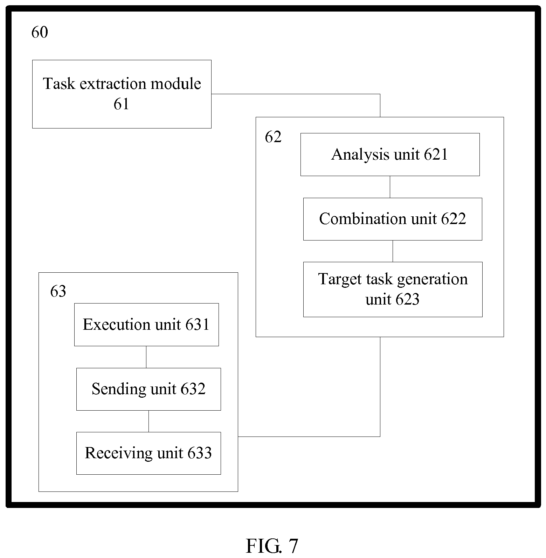

For specific implementation of the modules in the application program 552, refer to corresponding modules in an embodiment shown in FIG. 7, and details are not described herein again.

The processor 51 is configured to acquire at least two MapReduce tasks, and combine the at least two MapReduce tasks to obtain a target MapReduce task.

The at least two MapReduce tasks are serially arranged according to an execution sequence. When two MapReduce tasks are serially arranged, an output value obtained after the former MapReduce task is executed is an input value of the latter MapReduce task.

For example, MapReduce 1 - MapReduce 2 - ... - MapReduce N are serial tasks, where N is an integer greater than or equal to 3. The MapReduce task 1 includes outputting a result Output 1 after executing a Map task 1. The MapReduce task 2 includes outputting a result Output 2 after executing a Map task 2, and using the Output 1 as an input parameter for a process of executing the Map 2.... The MapReduce task N includes outputting a result Output N after executing a Map task N, and using an Output N-1 as an input parameter for a process of executing the Map N.

Then, the processor 51 may be configured to combine the Map 1, the Map 2, ..., and the Map N, and generates a new Map task that is referred to as a target Map task. An output result obtained after the processor 51 executes the target Map task is the Output N. After the target Map task is executed and the Output N is output, the Output N is sent, through the communications interface 54, to a device used to execute a Reduce task. In this way, it is implemented that the computing device 50 combines the MapReduce 1, the Map Reduce 2, ..., and the MapReduce N to obtain the target MapReduce task, where the target MapReduce task is a combination of the target Map task and the Reduce task.

The processor 51 is further configured to execute the target MapReduce task, obtain an output result of the target MapReduce task, and send the output result to the communications interface.

For example, MapReduce 1 - MapReduce 2 - MapReduce 3 - MapReduce 4 - MapReduce 5 are serial tasks used to implement accumulative computation. A raw value is 10. The MapReduce task 1 is a task used to add 1 to the raw value, where a Map task 1 of the MapReduce task 1 is used to implement "+1". The MapReduce task 2 is a task used to add 2 to the raw value, where a Map task 2 of the MapReduce task 2 is used to implement "+2". The MapReduce task 3 is a task used to add -1 to the raw value, where a Map task 3 of the MapReduce task 3 is used to implement "-1".

The MapReduce task 4 is a task used to add 0 to the raw value, where a Map task 4 of the MapReduce task 4 is used to implement "+0". The MapReduce task 5 is a task used to add 1 to the raw value, where a Map task 5 of the MapReduce task 5 is used to implement "+1".

If the solution in the prior art is used, execution steps of the serial tasks of MapReduce 1 - MapReduce 2 - MapReduce 3 - MapReduce 4 - MapReduce 5 are shown in FIG. 1b and include the following:
1. A processor of a computing device executes the MapReduce 1, reads the raw value to obtain an input value 10, executes the Map task 1 to obtain an output result 11, and sends, through the communications interface, the output result 11 to the device used to execute a Reduce task, so as to perform a Reduce task on the output result 11.
2. The processor executes the MapReduce 2, which requires the processor to read the output result 11 of S1 from a distributed system through the communications interface and use the output result 11 as an input value, execute the Map task 2 to obtain an output result 13, and then send, through the communications interface, the output result 13 to the device used to execute a Reduce task, so as to perform a Reduce task on the output result 11.
3. The processor executes the Map Reduce 3. The processor reads the output result 13 of S2 from the distributed system through the communications interface, executes the Map task 3 to obtain an output result 12, and then sends, through the communications interface, the output result 12 to the device used to execute a Reduce task, so as to perform a Reduce task on the output result 11.
4. The processor executes the Map Reduce 4. The processor reads the output result 12 of S3 from the distributed system through the communications interface, executes the Map task 4 to obtain an output result 12, and then sends, through the communications interface, the output result 12 to the device used to execute a Reduce task, so as to perform a Reduce task on the output result 11.
5. The processor executes the Map Reduce 5. The processor reads the output result 12 of S4 from the distributed system through the communications interface, executes the Map task 5 to obtain an output result 13, and then sends, through the communications interface, the output result 15 to the device used to execute a Reduce task, so as to perform a Reduce task on the output result 11.

As a result, in the prior art, the processor of the computing device needs to read data from or write data to the distributed system through the communications interface for at least four times. However, in this embodiment, after determining the MapReduce tasks that are serially arranged and need to be combined, the processor 51 may combine all the MapReduce tasks into one MapReduce task. For example, after the MapReduce task 1, the MapReduce task 2, the MapReduce task 3, the MapReduce task 4, and the MapReduce task 5 are combined, a first target MapReduce task is obtained. A Map task of the first target MapReduce task is a Map M, the Map 1 to the Map 5 are sequentially executed directly in a memory of the computing device 50, namely, "+1+2-1+0+1", to obtain that the Map task M is "+3". Then, an output result of executing the first target MapReduce task by the processor 51 is Output M=10+3=13.

Alternatively, after determining the MapReduce tasks that are serially arranged and need to be combined, the processor 51 may combine some of all the MapReduce tasks into one MapReduce task. For example, the MapReduce task 1, the MapReduce task 2, the MapReduce task 3, and the MapReduce task 4 are combined to obtain a second target MapReduce task. A Map task of the second target MapReduce task is a Map M', the Map 1 to the Map 5 are sequentially executed directly in a memory of the computing device, namely, "+1+2-1+0", to obtain that the Map task M is "+2". Then, the second target MapReduce task may be implemented in a form shown in FIG. 1a, that is, two MapReduce tasks in a serial relationship that are second target MapReduce - MapReduce 5 are implemented.

The communications interface 54 is configured to send the output result to an external storage device.

Further, the processor 51 is specifically configured to: extract, from the at least two MapReduce tasks, a Map task corresponding to each MapReduce task; combine, according to an information dependency between the at least two MapReduce tasks, code of the Map task corresponding to each MapReduce task of the at least two MapReduce tasks, and obtain code of a combined Map task, where when the information dependency exists between the at least two MapReduce tasks, the at least two MapReduce tasks are sequentially arranged according to an execution sequence, and an output value of code of a Map task corresponding to a former MapReduce task is used as an input value of code of a Map task corresponding to a latter MapReduce task adjacent to the former MapReduce task; and obtain the target MapReduce task by using the code of the combined Map task.

Optionally, the processor 51 is specifically configured to execute the combined Map task, and send an execution result of the combined Map task to the device used to execute a Reduce task.

In practical application, the processor 51 is specifically configured to: acquire environment setup operation code, logical operation code, and environment cleanup operation code that are of the Map task corresponding to each MapReduce task; and first compile the acquired environment setup operation code of the Map task corresponding to each MapReduce task, then compile the acquired logical operation code of the Map task corresponding to each MapReduce task, then compile the acquired environment cleanup operation code of the Map task corresponding to each MapReduce task, and finally, obtain the code of the combined Map task.

According to the computing device for processing serial tasks provided in this embodiment of the present invention, multiple serial MapReduce tasks can be combined, and a MapReduce task obtained by means of combination is executed. In the MapReduce task obtained by means of combination, a Reduce task needs to be executed only once. Therefore, in the present invention, by means of combination of MapReduce tasks for execution, a quantity of times required for executing a Reduce task during execution of serial MapReduce tasks is reduced, and time and network bandwidth that need to be occupied when an output result is read from disks of node devices in a distributed system in a process of executing the Reduce task are reduced, thereby reducing time and network resources required for processing a large amount of data.

An embodiment of the present invention further provides a data processing apparatus 60 for processing serial tasks, and as shown in FIG. 6, the data processing apparatus 60 may include:
a task extraction module 61, configured to acquire at least two MapReduce tasks, where the at least two MapReduce tasks are serially arranged according to an execution sequence, the at least two MapReduce tasks are serially arranged according to an execution sequence, and when two MapReduce tasks are serially arranged, an output value obtained after the former MapReduce task is executed is an input value of the latter MapReduce task;
a combination module 62, configured to combine the at least two MapReduce tasks to obtain a target MapReduce task; and
an execution module 63, configured to execute the target MapReduce task, and obtain an output result of the target MapReduce task.

As shown in FIG. 7, the combination module 62 may include:
an analysis unit 621, configured to extract, from the at least two MapReduce tasks, a Map task corresponding to each MapReduce task;
a combination unit 622, configured to combine code of the Map task corresponding to each MapReduce task of the at least two MapReduce tasks, and obtain code of a combined Map task, where when an information dependency exists between the at least two MapReduce tasks, the at least two MapReduce tasks are sequentially arranged according to the execution sequence, and an output value of code of a Map task corresponding to a former MapReduce task is used as an input value of code of a Map task corresponding to a latter MapReduce task adjacent to the former MapReduce task; and
a target task generation unit 623, configured to obtain the target MapReduce task by using the code of the combined Map task.

The combination unit 622 is specifically configured to: acquire environment setup operation code, logical operation code, and environment cleanup operation code that are of the Map task corresponding to each MapReduce task; and first compile the acquired environment setup operation code of the Map task corresponding to each MapReduce task, then compile the acquired logical operation code of the Map task corresponding to each MapReduce task, then compile the acquired environment cleanup operation code of the Map task corresponding to each MapReduce task, and finally, obtain the code of the combined Map task.

Optionally, the execution module 63 includes:
an execution unit 631, configured to execute the combined Map task;
a sending unit 632, configured to send an execution result of the combined Map task to a device used to execute a Reduce task; and
a receiving unit 633, configured to receive an output result sent by the device used to execute a Reduce task, where the output result is obtained by the device used to execute a Reduce task according to the execution result of the combined Map task.

According to the data processing apparatus for processing serial tasks provided in this embodiment of the present invention, multiple serial MapReduce tasks can be combined, and a MapReduce task obtained by means of combination is executed. In the MapReduce task obtained by means of combination, a Reduce task needs to be executed only once. Therefore, in the present invention, by means of combination of MapReduce tasks for execution, a quantity of times required for executing a Reduce task during execution of serial MapReduce tasks is reduced, and time and network bandwidth that need to be occupied when an output result is read from disks of node devices in a distributed system in a process of executing the Reduce task are reduced, thereby reducing time and network resources required for processing a large amount of data.

The embodiments in this specification are all described in a progressive manner, for same or similar parts in the embodiments, reference may be made to these embodiments, and each embodiment focuses on a difference from other embodiments.

Especially, a device embodiment is basically similar to a method embodiment, and therefore is described briefly; for related parts, reference may be made to partial descriptions in the method embodiment.

Persons of ordinary skill in the art may understand that all or some of the processes of the methods in the embodiments may be implemented by a computer program instructing relevant hardware. The program may be stored in a computer-readable storage medium. When the program runs, the processes of the methods in the embodiments are performed. The foregoing storage medium may include: a magnetic disk, an optical disc, a read-only memory (Read-Only Memory, ROM), a random access memory (Random Access Memory, RAM), or the like.

The foregoing descriptions are merely specific implementation manners of the present invention, but are not intended to limit the protection scope of the present invention.

Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A data processing apparatus for processing serial tasks, comprising:
a task extraction module, configured to acquire at least two MapReduce tasks, wherein the at least two MapReduce tasks are serially arranged according to an execution sequence, the at least two MapReduce tasks are serially arranged according to an execution sequence, and when two MapReduce tasks are serially arranged, an output value obtained after the former MapReduce task is executed is an input value of the latter MapReduce task;
a combination module, configured to combine the at least two MapReduce tasks to obtain a target MapReduce task; and
an execution module, configured to execute the target MapReduce task, and obtain an output result of the target MapReduce task.

2. The data processing apparatus for processing serial tasks according to claim 1, wherein the combination module comprises:
an analysis unit, configured to extract, from the at least two MapReduce tasks, a Map task corresponding to each MapReduce task;
a combination unit, configured to combine code of the Map task corresponding to each MapReduce task of the at least two MapReduce tasks, and obtain code of a combined Map task, wherein when an information dependency exists between the at least two MapReduce tasks, the at least two MapReduce tasks are sequentially arranged according to the execution sequence, and an output value of code of a Map task corresponding to a former MapReduce task is used as an input value of code of a Map task corresponding to a latter MapReduce task adjacent to the former MapReduce task; and
a target task generation unit, configured to obtain the target MapReduce task by using the code of the combined Map task.

3. The data processing apparatus for processing serial tasks according to claim 2, wherein the execution module comprises:
an execution unit, configured to execute the combined Map task;
a sending unit, configured to send an execution result of the combined Map task to a device used to execute a Reduce task; and
a receiving unit, configured to receive an output result sent by the device used to execute a Reduce task, wherein the output result is obtained, according to the execution result of the combined Map task, by the device used to execute a Reduce task.

4. The data processing apparatus for processing serial tasks according to claim 2 or 3, wherein the combination unit is specifically configured to:
acquire environment setup operation code, logical operation code, and environment cleanup operation code that are of the Map task corresponding to each MapReduce task; and
first compile the acquired environment setup operation code of the Map task corresponding to each MapReduce task, then compile the acquired logical operation code of the Map task corresponding to each MapReduce task, then compile the acquired environment cleanup operation code of the Map task corresponding to each MapReduce task, and finally, obtain the code of the combined Map task.

5. A data processing method for processing serial tasks, comprising:
acquiring at least two MapReduce tasks, wherein the at least two MapReduce tasks are serially arranged according to an execution sequence, and when two MapReduce tasks are serially arranged, an output value obtained after the former MapReduce task is executed is an input value of the latter MapReduce task;
combining the at least two MapReduce tasks to obtain a target MapReduce task; and
executing the target MapReduce task, and obtaining an output result of the target MapReduce task.

6. The data processing method for processing serial tasks according to claim 5, wherein the combining the at least two MapReduce tasks to obtain a target MapReduce task specifically comprises:
extracting, from the at least two MapReduce tasks, a Map task corresponding to each MapReduce task;
combining code of the Map task corresponding to each MapReduce task of the at least two MapReduce tasks, and obtaining code of a combined Map task, wherein when an information dependency exists between the at least two MapReduce tasks, the at least two MapReduce tasks are sequentially arranged according to the execution sequence, and an output value of code of a Map task corresponding to a former MapReduce task is used as an input value of code of a Map task corresponding to a latter MapReduce task adjacent to the former MapReduce task; and
obtaining the target MapReduce task by using the code of the combined Map task.

7. The data processing method for processing serial tasks according to claim 6, wherein the executing the target MapReduce task, and obtaining an output result of the target MapReduce task comprises:
executing the combined Map task, and sending an execution result of the combined Map task to a device used to execute a Reduce task; and
receiving an output result sent by the device used to execute a Reduce task, wherein the output result is obtained, according to the execution result of the combined Map task, by the device used to execute a Reduce task.

8. The data processing method for processing serial tasks according to claim 6 or 7, wherein the combining code of the Map task corresponding to each MapReduce task of the at least two MapReduce tasks, and obtaining code of a combined Map task specifically comprises:
acquiring environment setup operation code, logical operation code, and environment cleanup operation code that are of the Map task corresponding to each MapReduce task; and
first compiling the acquired environment setup operation code of the Map task corresponding to each MapReduce task, then compiling the acquired logical operation code of the Map task corresponding to each MapReduce task, then compiling the acquired environment cleanup operation code of the Map task corresponding to each MapReduce task, and finally, obtaining the code of the combined Map task.
